# EUROPEAN PATENT APPLICATION

(11) **EP 4 583 233 A1**
(43) Date of publication of application: **09.07.2025**
(21) Application number: 24213344.5
(22) Date of filing: 15.11.2024
(51) Int. Cl.: H01M 10/0583, B26F 3/02, B26F 3/06, B26D 5/00

(54) **SEPARATOR FILM CUTTER AND ELECTRODE ASSEMBLY APPARATUS INCLUDING THE SAME**

(30) Priority: 12.12.2023 KR 20230179731
(71) Applicant: SAMSUNG SDI CO., LTD., Yongin-si, Gyeonggi-do 17084 (KR)
(72) Inventor: Cho, Jae Kyung, 17084 Yongin-Si, Gyeonggi-do (KR); Ki, Daewook, 17084 Yongin-Si, Gyeonggi-do (KR); Lee, Jiyong, 17084 Yongin-Si, Gyeonggi-do (KR); Jeong, Donghyeok, 17084 Yongin-Si, Gyeonggi-do (KR)
(74) Representative: Gulde & Partner

(57) **Abstract**

A separator film cutter includes a melt cutting unit configured to produce a melting portion by locally heating a separator film, with a tensile force being applied to opposite ends of the separator film, to cut the separator film, a driver configured to drive the melt cutting unit to selectively contact the separator film, and a controller configured to control the driver to heat the separator film by causing the separator film and the melt cutting unit to be in contact for a predetermined time.

## Description

### BACKGROUND

### 1. Field

Embodiments relate to a separator film cutter and an electrode assembly apparatus including the same and, more particularly, to a separator film cutter configured to cut a rechargeable battery separator and an electrode assembly apparatus including the same.

### 2. Description of the Related Art

In general, a rechargeable battery is manufactured by cutting electrode plates, with an active material being applied to the surface of a collector, to a size corresponding to the size of the battery, forming an electrode assembly by stacking the cut positive and negative electrode plates together with a separator film in an alternating manner, and inserting the electrode assembly into a case containing an electrolyte.

In this case, the electrode assembly is generally assembled by folding the separator film supplied by the separator film supplier and then placing the positive electrode and the negative electrode alternately on respective folded separator films to be integrated with the separator film. Accordingly, to form the electrode assembly into a unit electrode of an individual secondary battery, it is necessary to cut the folded separator films of the electrode assembly from the mother separator film connected to the separator film supply.

A cutting knife is typically used to cut the folded separator films from the mother separator film. The folded separator films are separated from the mother separator film by moving the cutting knife to a cutting position and mechanically cutting the mother separator film.

However, with the conventional cutting knife, there is a problem in that the mother separator film is cut using physical friction, which crushes a coating layer coated on the surface of the mother separator film, thereby causing the coating layer to scatter and the cutting knife to be replaced frequently due to the wear of the blade of the knife.

In particular, in a case where the cutting knife is formed of a durable high-hardness metal with little wear, the cutting cost may increase. In a case where high-speed cutting is desired, a separate acceleration space is necessary to accelerate the cutting knife, thereby increasing the difficulty of installation.

Accordingly, there is an increasing necessity for a new type of separator film cutter, able to replace mechanical cutting and an electrode assembly apparatus including the same.

The above information disclosed in this Background section is for enhancement of understanding of the background of the present disclosure, and therefore, it may contain information that does not constitute related (or prior) art.

### SUMMARY

Embodiments include a separator film cutter. The separator film cutter includes a melt cutting unit configured to produce a melting portion by locally heating a separator film, with a tensile force being applied to opposite ends of the separator film, to cut the separator film, a driver configured to drive the melt cutting unit to selectively contact the separator film, and a controller configured to control the driver to heat the separator film by causing the separator film and the melt cutting unit to be in contact for a predetermined time.

The melt cutting unit may include an electric heating line traversing in a width direction of the separator film and configured to generate Joule heat, supporting ends supporting the electric heating line at opposite ends thereof; and a power regulator configured to selectively regulate power supplied to the electric heating line.

The electric heating line may continuously and simultaneously contact the separator film in the width direction, and the melting portion may be provided as a melt line continuously extending in the width direction.

The electric heating line may discontinuously and simultaneously contact the separator film in the width direction, and the melting portion may be provided as a plurality of melting portion spots discontinuously arranged in the width direction.

The driver may include a drive rod connected to the melt cutting unit, a protruding piston disposed on an electrode ejector and configured to transport the drive rod in a longitudinal direction of the separator film to place the drive rod at a cutting position of the separator film, and a cutting driver configured to linearly move the drive rod in a direction perpendicular to an upper surface of the separator film from the cutting position.

The controller may include a user interface by which the predetermined time and properties of the melting portion are set, a drive controller configured to control the cutting driver so that the separator film and the melt cutting unit are in contact with each other for the predetermined time, and a power source configured to supply power to the melt cutting unit.

The separator film includes a substrate and a coating layer disposed on the substrate, and the melt cutting unit contacts the coating layer to melt the substrate using conduction heat transferred through the coating layer.

The melting portion may cause the separator film to be cut by stretch-breaking of the substrate.

The substrate may include one of polyethylene and polypropylene, and the coating layer may include a ceramic.

The melting portion may have a temperature of 150°C to 200°C, and the predetermined time may range from 0.1 seconds to 0.5 seconds.

Embodiments include an electrode assembly apparatus for a rechargeable battery. The electrode assembly apparatus including a separator film supply including at least one feed roller and configured to supply a separator film having a predetermined tensile force, a folding guide configured to move in a vertical direction and a horizontal direction in an electrode stacking area and to shape the separator film supplied by the feed roller into folded separator films for electrode stacking, an electrode ejector configured to separably fix an electrode assembly in which a plurality of electrodes having different polarities are stacked alternately between the folded separator films, and to extend the separator film connected to the folded separator films to a cutting position, and a separator film cutter configured to produce a melting portion by heating the separator film at the cutting position to cut the separator film by stretch-breaking of the melting portion caused by a tensile force.

The folding guide may include a moving guide configured to move in the horizontal direction at the cutting position of the separator film in the vertical direction in the electrode stacking area to shape the separator film into the folded separator films, and a leveling guide disposed below the folding guide to maintain the folded separator films flat along surfaces of the plurality of electrodes.

A folded separator film of the folded separator films may be disposed on an uppermost electrode of the electrode assembly may be integrated with the separator film to remain flat and horizontal by means of the leveling guide, and the separator film may be transported to the cutting position by transportation of the electrode ejector fixing the electrode assembly so that the tensile force is applied to the separator film.

The electrode assembly may further include a stacking die disposed below the folding guide and configured to form the electrode stacking area between the folding guide and the stacking die, with an upper surface of the stacking die on which the folded separator films are disposed, and an electrode supply disposed on opposite sides of the stacking die and configured to stack the plurality of electrodes having different polarities alternately on the folded separator films, wherein, every time that each of the electrodes is disposed, a folded separator film of the folded separators film is disposed on the upper surface of the electrode by the leveling guide.

The separator film cutter may include a melt cutting unit configured to produce the melting portion by heating a portion of the separator film corresponding to the cutting position and cutting the separator film by the tensile force applied to the melting portion, a driver configured to perform a transport operation of transporting the melt cutting unit from the electrode ejector to the cutting position and a lift operation of selectively moving the melt cutting unit up or down from the cutting position to selectively bring into contact with the separator film, and a controller configured to control the transport operation and the lift operation to control the driver so that the separator film and the melt cutting unit are in contact with each other for a predetermined time.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a schematic perspective view showing a separator film cutter according to one or more embodiments of the present disclosure;
FIG. 2 illustrates one of the supporting ends provided in the melt cutting unit shown in FIG. 1 according to one or more embodiments of the present disclosure;
FIG. 3A illustrates a separator film in which a melting portion is produced by the separator film cutter shown in FIG. 1 according to one or more embodiments of the present disclosure;
FIG. 3B illustrates a separated separator film in response to stretch-breaking of the melting portion shown in FIG. 3A according to one or more embodiments of the present disclosure;
FIG. 4 illustrates a configuration view showing an apparatus for assembling an electrode including the separator film cutter shown in FIG. 1 according to one or more embodiments of the present disclosure;
FIG. 5 illustrates the folding guide included in the electrode assembly apparatus shown in FIG. 4 according to one or more embodiments of the present disclosure;
FIG. 6 illustrates a state in which the separator film cutter included in the electrode assembly apparatus illustrated in FIG. 4 is disposed at a cutting position according to one or more embodiments of the present disclosure; and
FIG. 7 illustrates a state in which the separator film cutter illustrated in FIG. 6 contacts the separator film according to one or more embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her embodiments in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. If an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. If phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that if a component is referred to as being "linked," "coupled," or "connected" to another component, the elements may be directly "coupled," "linked" or "connected" to each other, or another component may be "interposed" between the components".

Throughout the specification, if "A and/or B" is stated, it means A, B or A and B, unless otherwise stated. That is, "and/or" includes any or all combinations of a plurality of items enumerated. If "C to D" is stated, it means C or more and D or less, unless otherwise specified.

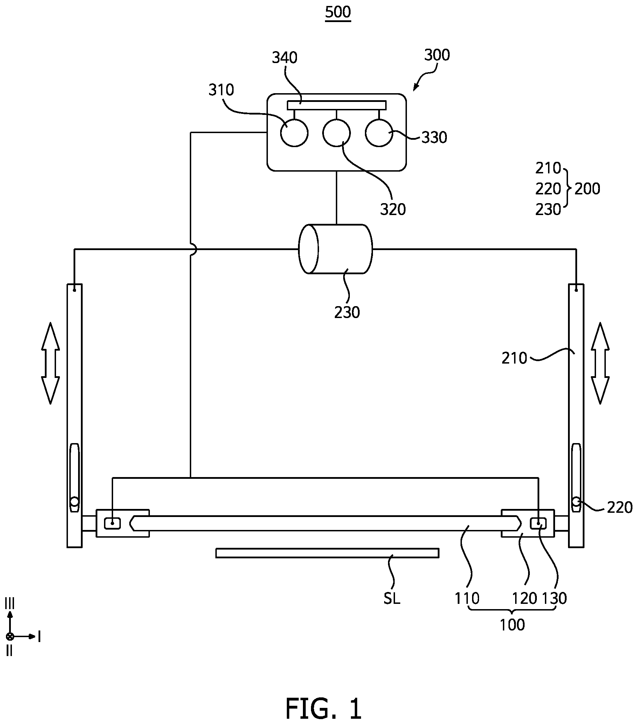

FIG. 1 illustrates a schematic perspective view showing a separator film cutter according to one or more embodiments of the present disclosure.

Referring to FIG. 1, a separator film cutter 500 according to embodiments of the present disclosure may include a melt cutting unit 100 (e.g., a melt cutter) configured to cut a separator film SL by melting, a driver 200 configured to drive the melt cutting unit 100, and a controller 300 configured to control the operation of the driver 200 according to cutting conditions.

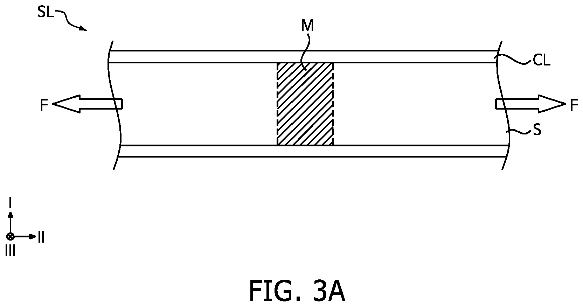

For example, the separator film cutter 500 may cut separator films for rechargeable batteries. The separator film SL for rechargeable batteries may include a substrate S shown in FIG. 3A, the substrate S including a flexible material and a coating layer CL disposed on the substrate S. In the present embodiment, the substrate S may include a flexible film of, for example, polyethylene or polypropylene, and the coating layer CL may include an inorganic compound such as ceramic.

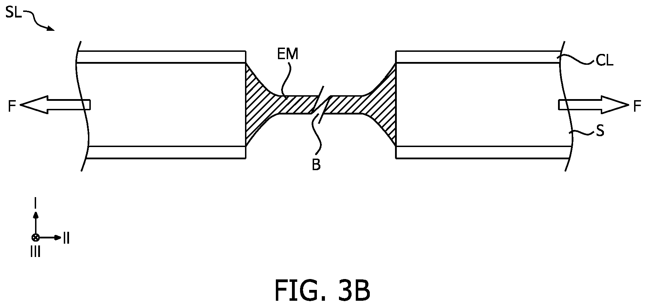

Also shown in FIG. 3, the melt cutting unit 100 may cut the separator film SL by producing a melting portion M by locally heating the separator film SL while applying a tensile force F to opposite ends of the separator film SL, followed by stretch-breaking of the melting portion caused by the tensile force F applied thereto.

The melt cutting unit 100 may include an electric heating line 110 traversing in a first direction (i.e., I axis), i.e., a width direction, of the separator film SL and generating heat (e.g., Joule heat), supporting ends 120 supporting the electric heating line 110 at opposite ends of the electric heating line 110, and a power regulator 130 supplying power to the electric heating line 110 through the supporting ends 120.

The electric heating line 110 may include a line-shaped heating element extending in the first direction (I axis) and capable of generating heat by electrical resistance. The heating element may generate Joule heat by an electric current applied from the power regulator 130 and radiate the heat to the outside, and the radiated heat may be transferred to the substrate S inside the separator film SL through the coating layer CL outside the separator film SL. Accordingly, the substrate S may include a melting portion M partially melted by conduction heat transferred through the coating layer CL. The melting portion M may be stretched out in a second direction (i.e., II axis), i.e., the longitudinal direction, of the separator film SL by the tensile force F already applied to the separator film SL. The melting portion M may break in a case where the stretching limit is exceeded. As a result, the separator film SL may be separated at the breaking point of the stretched melting portion M.

In some embodiments, the electric heating line 110 may include a Nichrome wire, i.e., an alloy of nickel and chromium. The electric heating line 110 may be configured to have a length greater than the width of the separator film SL so that a plurality of areas of the separator film SL may be heated together in the first direction (I axis). For example, the electric heating line 110 may be provided as a melting line extending continuously in the first direction (I axis) by continuously and simultaneously contacting the separator film SL in the first direction (I axis).

In other embodiments, the electric heating line 110 may discontinuously and simultaneously contact the separator film SL in the first direction (I axis), and thus a melting portion M may be provided as a plurality of melting portion spots discontinuously arranged in the first direction (I axis). Herein, the number of melting portion spots may be set in a number sufficient to perform sufficient stretch-breaking by the tensile force F.

The driver 200 may drive the melt cutting unit 100 to selectively contact the separator SL. That is, the melt cutting unit 100 may be driven by the driver 200 to selectively contact the separator SL while moving up or down in a third direction (i.e., III axis).

In an embodiment, the driver 200 may include drive rods 210 connected to the melt cutting unit 100, protruding pistons 220 each configured to transport the corresponding drive rod 210 in the second direction (II axis) to place the drive rod 210 at a cutting position, and a cutting driver 230 configured to linearly move the drive rods 210 in the third direction (III axis).

Each of the drive rods 210 may be configured as a longitudinal member coupled to an outer surface of the supporting ends 120 by coupling means such as bolts and extending in the third direction (III axis). The drive rods 210 may be provided in a pair to engage with the supporting ends 120 disposed at opposite ends of the electric heating line 110, thereby allowing the electric heating line 110 to move while remaining horizontal with respect to the separator film SL.

Each of the protruding pistons 220 may have a cylindrical shape extending in the second direction (II axis) and be connected to the drive rod 210, so that the protruding piston 220 may move linearly in the second direction (II axis). The protruding pistons 220 may be movably fixed to external support bodies (not shown) supporting the separator film cutter 500, and may be individually arranged to correspond to the respective drive rods 210.

If the protruding piston 220 protrudes to advance in the second direction (II axis), the drive rod 210 may also advance in the second direction (II axis), and the melt cutting unit 100 coupled to the drive rods 210 may also advance in the second direction (II axis).

In contrast, if the protruding piston is pulled to retract in the second direction (II axis), the drive rods 210 may also retract in the second direction (II axis), and the melt cutting unit 100 coupled to the drive rods 210 may also return to the initial position in the second direction (II axis).

Accordingly, the melt cutting unit 100 may move to the cutting position by a horizontal movement in the second direction (II axis) caused by the protruding pistons 220, and at the cutting position, may selectively contact the separator film SL by a vertical movement in the third direction (III axis) of the drive rods 210.

The drive rods 210 may be provided as a structure having various compositions and shapes by which the drive rods 210 have sufficient strength and stiffness to reliably support the melt cutting unit 100, and the protruding pistons 220 may be provided as a structure having sufficient kinetic characteristics to move an assembly of the drive rods 210 and the melt cutting unit 100 in the second direction (II axis).

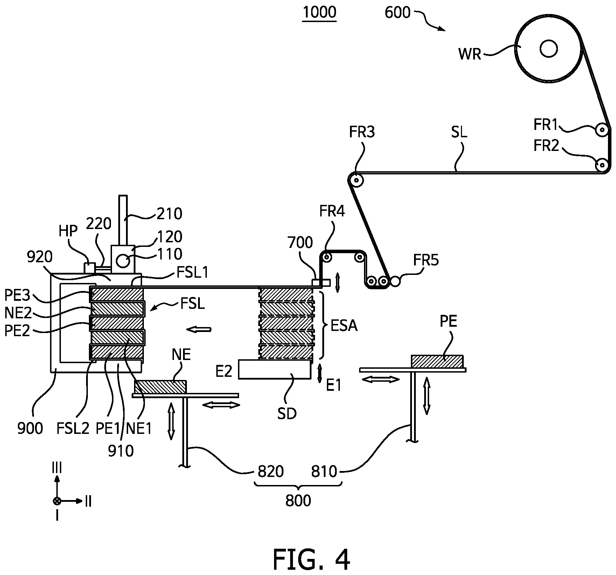

The protruding piston 220 may be driven to move by the horizontal driver HP (see FIG. 4), and the cutting driver 230 may be moved up and down by the cutting driver 230.

The cutting driver 230 may linearly move the drive rod 210 in the third direction (III axis) at the cutting position to selectively bring the electric heating line 110 and the separator film SL into contact with each other. For example, by disposing a rack inside the drive rod 210 and disposing a pinion corresponding to the rack on the surface of the protruding piston 220, the drive rod 210 may be moved up and down in the third direction by rolling motion of the rack and the pinion.

Accordingly, the cutting driver 230 may be provided variously as long as the cutting driver 230 may move the drive rod 210 linearly relative to the protruding piston 220. For example, the cutting driver 230 may include a linear motor having a sufficient degree of precision to keep the electric heating line 110 and the separator film SL in contact for a predetermined contact time and then separate the electric heating line 110 and the separator film SL. In the present embodiment, the cutting driver 230 may be implemented as a stepper motor capable of being precisely controlled for extremely short contact times.

The controller 300 may control the driver 200 to bring the separator film SL and the melt cutting unit 100 into contact for a predetermined contact time, thereby heating the separator film SL. Accordingly, the melt cutting unit 100 may heat the substrate S of the separator film SL by contact with the separator film SL according to the control logic of the controller 300. The controller 300 may include a control processor 340 which is systematically connected to a user interface 310, a drive controller 320, and a power source 330 to form a control system.

The user interface 310 may set various driving data for performing separator film cutting, including the contact time of the electric heating line 110 with the separator film SL and the properties of the substrate S. For example, the user interface 310 may include input means such as a keyboard, a mouse, and a touch screen and may input or set appropriate operation data for various separator films SL, in consideration of the cutting environment.

Because the separator film SL is cut by stretch-breaking the substrate S using conduction heat through the coating layer CL (see FIGS. 3A and 3B), it may be desirable to melt the substrate S of the separator film SL to an appropriate degree for stretch-breaking by the tensile force F applied to the separator film SL. That is, it may be desirable to adjust the amount of heat supplied according to the properties of the substrate S. Accordingly, the properties of the substrate S and the corresponding heat transfer time, i.e., the contact time, may be input as operation data for cutting the separator film. The contact time and the properties of the substrate S may be set manually by the user or automatically from existing contact time data according to the properties.

The drive controller 320 may include a numerical control algorithm for regulating the contact between the electric heating line 110 and the separator film SL for a predetermined contact time. The numerical control algorithm may precisely control the operation of a driver having precise control characteristics, such as a stepper motor, to control the operation of the driver in nanoseconds. Accordingly, the contact time of the electric heating line 110 and the separator film SL may be precisely controlled by precisely controlling the linear transport in the third direction (III axis) of the drive rod 210 regulated by the cutting driver 230.

In particular, because the flexible material including the substrate S has low heat resistance, if the predetermined contact time is exceeded, the stretching property of the substrate S may be destroyed, and the melting portion M may be pressed against the coating layer CL. Accordingly, the drive controller 320 may be configured to accurately maintain the predetermined contact time.

In the present embodiment, the separator film SL may include, for example, polyethylene and be heated, so that the melting portion M may have a temperature of about 150°C to about 200°C in a state where a tensile force of about 2kgf is applied to the separator film SL. If the temperature of the melting portion M is lower than 150°C, the set tensile force may not be sufficient for stretch-breaking the melting portion M, thereby making it difficult to cut the separator film SL. If the temperature of the melting portion M is higher than 200°C, the viscosity of the melting portion M may be low, thereby making it difficult to achieve sufficient elongation. Accordingly, if a tensile force of about 2 kgf is applied to the separator film SL including polyethylene, for example, the electric heating line 110 may heat the separator film SL to maintain the temperature of the melting portion M at about 150°C to about 200°C.

In particular, the temperature of the electric heating line 110 may be set to a sufficiently high temperature so that the separator film SL and the electric heating line 110 may be instantaneously brought into contact with each other to form the melting portion M. With increases in the contact time, the size of the melting portion M may increase to increase the elongation of the separator film SL, thereby resulting in a decrease in the thickness of the separator film disposed on an upper portion of an electrode assembly EA. In the present embodiment, the contact time of the separator film SL and the electric heating line 110 may be set to not exceed about 0.5 seconds. For example, the contact time may be set to be about 0.1 seconds to about 0.5 seconds.

The separator film SL may be configured to have a thickness of about 15 µm to about 20 µm, and only the substrate S except the coating layer CL may be stretched in the melting portion M. Thus, the thickness of the substrate S may be reduced less than or equal to about 12 µm in the melting portion M.

Preferably, the thickness of the substrate S in the melting portion M may be set in a range of about 8 µm to about 10 µm by making contact with the electric heating line 110. If the thickness of the substrate S is over about 10 µm in the melting point M, the tensile force for stretch-breaking the separator film SL may increase and the separator film SL may be damaged while the separator film SL is transported. In contrast, if the thickness of the substrate S is below about 8 µm in the melting point M, it is difficult to accurately set the breaking point B of the substrate S because the thickness of the substrate S is rapidly reduced. For those reasons, it is preferable that the thickness of the substrate S in the melting portion M is set in a range of about 8 µm to about 10 µm. The power source 330 may be connected to an external power source or may include a battery thereof. The power source 330 may be configured to be constantly connected to the power regulator 130, and the supply of power to the electric heating line 110 may be automatically regulated by a temperature sensor 131 and a transport sensor 132.

The control processor 340 may be provided as a process for performing the separator film cutting process to systematically control the operation of the user interface 310, the drive controller 320, and the power source 330. The control processor may include a built-in memory and logic elements to reliably perform an automatic cutting process for the separator film SL.

Accordingly, in accordance with the control logic working in conjunction with the battery assembly process of the controller 300, the separator film cutter 500 may perform the separator film cutting required in the battery assembly process.

In the present embodiment, the separator film cutter 500 configured to cut a separator film for a rechargeable battery is disclosed, but the application of the separator film cutter 500 may not be limited thereto. If the film to be separated includes a flexible film and a solid phase coating layer having a low thermal deformation rate and surrounding the flexible film and the solid phase coating layer may be used as a heat transfer medium, the film may be easily cut by the separator film cutter 500.

According to the separator film cutter described above, the separator film SL may be cut by stretch-breaking the substrate S by bringing the separator film SL and the melt cutting unit 100 into contact with each other for an appropriate contact time according to the properties of the substrate S.

In the conventional cutting process using a cutting knife, dust is generated in cutting the coating layer CL. In contrast, the separator film cutter 500 of the present disclosure does not break the coating layer CL, so that the generation of dust may be fundamentally prevented.

In addition, the melt cutting unit 100 may generate the melting portion M appropriate to the configuration of the separator film SL by the controller 300 and may cut the separator film SL by stretch-breaking the substrate S, thereby preventing a defect in which the breaking point B (see FIG. 3B) of the separator film SL is changed if the separator film to which a tensile force is applied is cut by the cutting knife. Furthermore, the cutting knife may be replaced with the electric heating line 110, so that the replacement cost of the worn cutting knife may be reduced, thereby increasing the efficiency of the electrode assembly process.

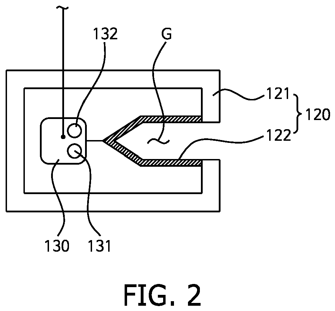

FIG. 2 illustrates one of the supporting ends provided in the melt cutting unit shown in FIG. 1 according to one or more embodiments of the present disclosure.

The supporting ends 120 may support and fix the electric heating line 110 at opposite ends of the electric heating line 110.

As illustrated in FIG. 2, the support end 120 may include a body 121 having a receiving recess G capable of receiving the electric heating line 110 and a heat dissipating member 122 disposed to cover an inner surface of the receiving recess G to block heat transfer from the electric heating line 110 to the body 121.

The body 121 may include a variety of shapes and members by which the body may traverse and fix the separator film SL in the first direction (I axis) and reciprocate in the third direction (III axis) perpendicular to the surface of the separator film SL in combination with the drive rod 210 as described later.

In the present embodiment, the electric heating line 110 is disclosed as being disposed in the receiving recess G provided in the body 121, but the electric heating line 110 may have various structures and shapes by which the electric heating line 110 may be fixed to the body 121.

The power regulator 130 may be disposed inside the body 121 to selectively supply the driving current applied by the controller 300 to the electric heating line 110. The power regulator 130 may be connected to the power source 330 of the controller 300 to provide power for generating heat (e.g., Joule heat) to the electric heating line 110.

In particular, the power regulator 130 may include a temperature sensor 131 capable of detecting the temperature of the electric heating line 110, and may selectively block or regulate the supply of power to the electric heating line 110 by comparing the temperature detected by the temperature sensor 131 with a predetermined temperature, i.e., a target temperature of the electric heating line 110.

In addition, a transport sensor 132 detecting the direction of movement of the electric heating line 110 may be further provided to detect an upward or downward movement of the electric heating line 110, to automatically supply power to the electric heating line 110 in the case of the downward movement of the electric heating line 110 for contact with the separator film SL, and to automatically block the supply of power to the electric heating line 110 in the case of the upward movement of the electric heating line 110 for separation of the separator film SL. Accordingly, the power supplied to the electric heating line 110 may be efficiently controlled.

FIG. 3A illustrates a separator film in which a melting portion is produced by the separator film cutter shown in FIG. 1 according to one or more embodiments of the present disclosure, and FIG. 3B illustrates a separated separator film in response to stretch-breaking of the melting portion shown in FIG. 3A according to one or more embodiments of the present disclosure.

The separator film SL for a rechargeable battery may include the substrate S including a flexible material and the coating layer CL disposed to enclose the substrate S. In the present embodiment, the substrate S may include a flexible film of, for example, polyethylene or polypropylene, and the coating layer CL may include an inorganic compound such as ceramic.

Joule heat may be generated by electric current applied to the heating element included in the electric heating line 110 and be radiated to the outside. In a case where the electric heating line 110 may move downward toward the separator film SL and may contact the coating layer CL, the Joule heat of the electric heating line 110 may be conducted to the substrate S through the coating layer CL, to thereby form the melting portion M in which the substrate S is partially melted.

Once the melting portion M is formed, the melting portion M may be stretched out in the second direction (II axis), i.e., the longitudinal direction of the separator film SL, by the tensile force F that is already applied to the separator film SL. If the amount of elongation of the melting portion M exceeds an elongation limit, i.e., a property of the substrate S, the melting portion M may break. As a result, the separator film SL may be separated at the breaking point B of the stretched melting portion M. Herein, the coating layer CL may include an inorganic compound having a sufficiently high melting point, such as a ceramic, so that the coating layer CL may not be melted by the Joule heat transferred through the electric heating line 110. If the melting portion M of the substrate S, which substantially forms the separator film SL, is broken, the coating layer CL may also be divided in a responsive manner, thereby cutting the separator film SL.

Compared to a conventional cutting knife, the melt cutting unit 100 may melt the separator film SL and separate the separator film SL by stretch-breaking of the melting portion M of the substrate S, and thus, may cut the separator film SL without any physical damages or frictions to the coating layer CL. That is, the separator film SL may be cut without shattering the coating layer CL.

Because the separator film SL is cut by stretch-breaking the substrate S by using conduction heat through the coating layer CL, the substrate S may be melted to such a desirable extent that the separator film SL is stretch-broken by the tensile force F. In other words, the amount of heat supplied to the separator film SL may be appropriately adjusted according to the physical properties of the substrate S.

FIG. 4 illustrates a configuration view showing an apparatus for assembling an electrode including the separator film cutter shown in FIG. 1 according to one or more embodiments of the present disclosure.

Referring to FIG. 4, an electrode assembly apparatus 1000 according to embodiments of the present disclosure may include: a separator film supply 600; a folding guide 700 configured to form folded separator films FSL by folding the separator film SL in a zigzag shape on a stacking die SD; an electrode supply 800 configured to form an electrode assembly EA by supplying electrodes PE and NE having different polarities to the folded separator films FSL; an electrode ejector 900 configured to eject an unit electrode assembly UEA to an electrode tray (not shown); and a separator film cutter 500 configured to produce the unit electrode assembly UEA by cutting the folded separator films FSL disposed on the electrode assembly EA and the separator film SL.

Herein, the separator film cutter 500 may have substantially the same configuration as the separator film cutter 500 described with reference to FIGS. 1 to 3. Accordingly, in FIG. 4, the same reference numerals denote the same components in FIGS. 1 to 3, and any further detailed descriptions of the same components are omitted.

In an embodiment, the separator film supply 600 may include a winding roller WR on which a separator film SL including a continuous flexible polymer is wound and a plurality of feed rollers FR1 to FR4 configured to transport the separator film SL unwound from the winding roller WR with a predetermined tensile force to the electrode supply 800 to form the electrode assembly EA.

The separator film SL may separate an anode and a cathode of a rechargeable battery, and include the substrate S including a flexible material and the coating layer CL disposed on an outer surface of the substrate S. The separator film SL of the present embodiment has substantially the same configuration as the separator film SL described with reference to FIGS. 3A and 3B. Accordingly, no further detailed description of the separator film SL will be provided.

The feed rollers FR1 to FR4 may transport the separator film SL from the winding roller WR to the electrode supply 800. The feed rollers FR1 to FR4 may feed the separator film SL to the folding guide 700 with an appropriate tensile force in order to form folded separator films FSL on the stacking die SD.

Depending on the characteristics of a transport path extending from the winding roller WR to the folding guide 700, the feed rollers FR1 to FR4 may be arranged in a plurality of different shapes and structures. Although not shown, a tension regulator may further be disposed between the winding roller WR and any one of the feed rollers FR1 to FR4 to adjust changes in the tension according to the unwinding tangential speed of the separator film SL.

Depending on the thickness of the separator film SL wound on the winding roller WR, the unwinding speed of the separator film SL may vary, thereby changing the tensile force of the transported separator film SL over time. Accordingly, a tension regulator may further be provided to maintain the tensile force of the transported separator film SL uniform regardless of the thickness of the separator film SL wound on the winding roller WR.

The folding guide 700 may feed the separator film SL to the stacking die SD by which the separator film SL is folded to form the folded separator films FSL and may easily cover electrodes PE or NE with the folded separator films FSL, in which the electrodes PE or NE are stacked on respective surfaces of the folded separator films FSL.

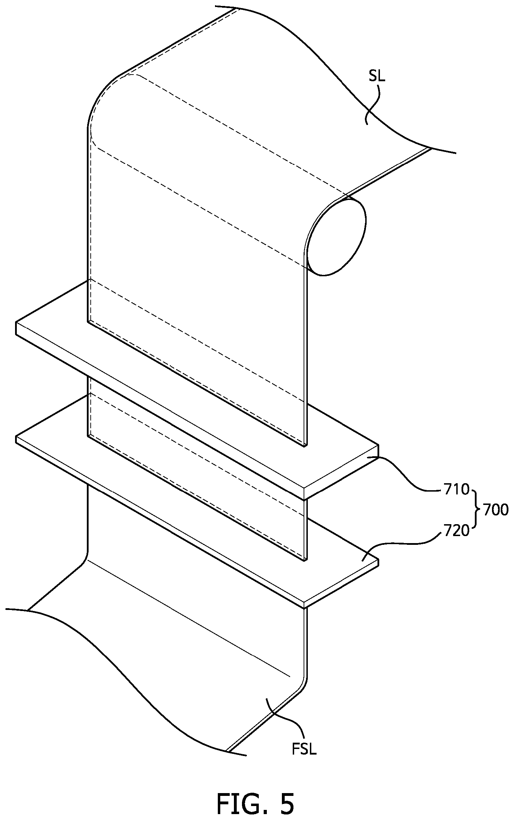

A detailed operation of the electrode assembly apparatus 1000 will be described in more detail with reference to FIGS. 5 to 7.

FIG. 5 illustrates the folding guide included in the electrode assembly apparatus shown in FIG. 4 according to one or more embodiments of the present disclosure.

Referring to FIG. 5, the folding guide 700 may move in the second direction (II axis) and the third direction (III axis) in an electrode stacking area ESA, and the separator film SL fed by the feed roller FR4 may be formed into the folded separator film FSL for electrode stacking by the folding guide 700.

The stacking die SD forming the folded separator film FSL may be disposed below the folding guide 700, and the electrodes PE and NE having different polarities may be alternately disposed on the folded separator film FSL that is provided on the stacking die SD, to thereby form an electrode assembly EA. Accordingly, a vertical space between the folding guide 700 and the stacking die SD may be provided as the electrode stacking area ESA for electrode stacking.

The separator film SL fed by the feed roller FR4 may move in the second direction (II axis) and then gradually move upwards from the stacking die SD in the third direction (III axis) by the folding guide 700, so that the separator film SL may be folded in a zigzag shape.

At this time, a positive electrode PE and a negative electrode NE are alternately supplied onto the upper surface of the corresponding folded separator film FSL from the electrode supply 800 positioned at a side of the stacking die SD every time the separator film SL is folded in the zigzag shape. As the folding guide 700 moves upwards, the folding of the separator film SL and the supply of the positive electrode PE or the negative electrode NE may be repeated to form the electrode assembly EA on the stacking die SD.

In the present embodiment, the folding guide 700 may include a moving guide 710 positioned adjacent to the feed roller FR4 and a leveling guide 720 positioned below the moving guide 710.The moving guide 710 may guide the separator film SL, which has passed through the feed roller FR4, to move in the third direction (III axis) and to move in the second direction (II axis) at each folding position of the separator film SL, to thereby form the separator film SL into the folded separator films FSL. The leveling guide 720 may be disposed below the moving guide 710 to maintain the folded separator films FSL flat along the surface of the electrodes PE and NE, so that the folded separator films FSL may have flat surfaces corresponding to the upper and lower surfaces of the electrodes PE and NE. In the present embodiment, the moving guide 710 and the leveling guide 720 may be hexahedral steel members, which are disposed side by side in a vertical direction, and each of which has a slot in the center through which the separator film SL passes. However, this is illustrative, and the moving guide 710 and the leveling guide 720 may be formed of various materials in different shapes as long as the separator film SL may be transported in the electrode stacking area ESA.

The moving guide 710 may be configured to move in the third direction (III axis), i.e., a vertical direction, and the second direction (II axis), i.e., a horizontal direction, in the electrode stacking area ESA, and the leveling guide 720 may be configured to move together with the moving guide 710 in the third direction (III axis) and to move in the second direction (II axis) separately from the moving guide 710.

If the separator film SL fed by the feed roller FR4 is inserted into the slot of the folding guide 700, the folding guide 700 may guide the separator film SL to the bottom surface of the stacking die SD, i.e., to the lowest portion of the electrode stacking area ESA. Subsequently, the folding guide 700 may move in the second direction (II axis) toward a second end E2 (see FIG. 4) of the stacking die SD while fixing one end of the separator film SL to a fixing end (not shown) provided at a first end E1 of the stacking die SD. The first end E1 and the second end E2 may be edge areas of the stacking die SD positioned symmetrically to each other in the second direction (II axis).

Accordingly, the separator film SL may be shaped into a firstly folded separator film folded to cover the stacking die SD, and the folding guide 700 may be positioned at the second end of the stacking die SD after the first folding operation.

After the first folding operation is completed, electrodes may be supplied by electrode supply 800. The electrode supply 800 may include a first supply 810 supplying positive electrodes PE and a second supply 820 supplying negative electrodes NE. The first supply 810 and the second supply 820 may be disposed on opposite sides of the stacking die SD.

For example, if the first folding operation is completed, the positive electrode PE may be supplied onto the surface of the firstly folded separator film FSL disposed on the surface of the stacking die SD. If the supply of the positive electrode PE is completed, the folding guide 700 may be returned to the first end E1. As a result, a first positive electrode PE1 may be disposed on the firstly folded separator film FSL that covers the surface of the stacking die SD. In the present embodiment, the configuration of feeding the positive electrode PE first is disclosed, but this is illustrative, and it is apparent that the negative electrode NE may be fed first. If the folding guide 700 returns to the first end E1, the leveling guide 720 may flatten the separator film SL under the moving guide 710 according to the surface shape of the first positive electrode PE1. Accordingly, the separator film SL may be secondly folded in such a way that the secondly folded separator film FSL may be disposed on the first positive electrode PE1.

While the folding guide 700 is returning to the first end E1, the second supply 820 may supply the negative electrode NE to the surface of the secondly folded separator film FSL disposed on the first positive electrode PE1. If the supply of the negative electrode NE is completed, the folding guide 700 may move again back to the second end E2. As a result, a first negative electrode NE1 may be disposed on the folded separator film FSL to cover the surface of the first positive electrode PE1. While the folding guide 700 is moving back to the second end E2, the positive electrode PE may be supplied again from the first supply 810 to the folded separator film FSL to cover the surface of the first negative electrode NE1, thereby providing a second positive electrode PE2.

By repeating the above processes, a plurality of positive and negative electrodes may be alternately stacked on the stacking die SD in such a configuration that the positive and negative electrodes are separated from each other by the folded separator films FSL that are repeatedly folded on the stacking die SD, to thereby obtain the electrode assembly EA. In the present embodiment, three positive electrodes PE1, PE2, and PE3 and two negative electrodes NE1 and NE2 are disposed alternately, but this is illustrative, and the numbers of the positive electrodes and the negative electrodes alternately stacked may be changed variously depending on the capacity of the rechargeable battery.

If the electrode assembly EA is completed, a hand (not shown) of the electrode ejector 900 may be inserted into a separation groove of the stacking die SD, and the first positive electrode PE1, i.e., the lowest electrode of the electrode assembly EA, and a third positive electrode PE3, i.e., the uppermost electrode of the electrode assembly EA may be coupled to the electrode ejector 900. Thereafter, the stacking die SD may move downwards and be separated from the electrode assembly EA.

The electrode ejector 900 may include a lower support end 910 supporting the lowermost electrode and an upper support end 920 coupled to the uppermost electrode, and the electrode assembly EA may be firmly fixed between the lower support end 910 and the upper support end 920.

The electrode assembly EA fixed to the electrode ejector 900 may be configured such that the upper folded separator film FSL1 disposed on the uppermost electrode and the separator film SL passing through the leveling guide 720 are connected to each other. Accordingly, it may be required that the upper folded separator film FSL1 be separated from the separator film SL passing through the leveling guide 720 for obtaining a unit electrode for the rechargeable battery.

For separating the electrode assembly EA from the separator film SL, the electrode ejector 900 may move in the longitudinal direction of the separator film SL. That is, the electrode assembly EA may be fixed to the electrode ejector 900 in such a configuration that the upper folded separator film FSL1 is connected to the separator film SL and the electrode ejector 900 may be driven to move away from the folding guide 700 at the same vertical position as the leveling guide 720. Thus, the separator film SL flattened by the leveling guide 720 may be drawn to extend by the upper folded separator film FSL1. In this case, the electrode ejector 900 may be controlled to move away from the folding guide 700 in such a way that the extended separator film SL is placed at the set cutting position. If the separator film SL is placed at the cutting position, the separator film cutter 500 disposed on the outside of the electrode ejector 900 may be transported to the cutting position to perform a cutting process to the separator film SL.

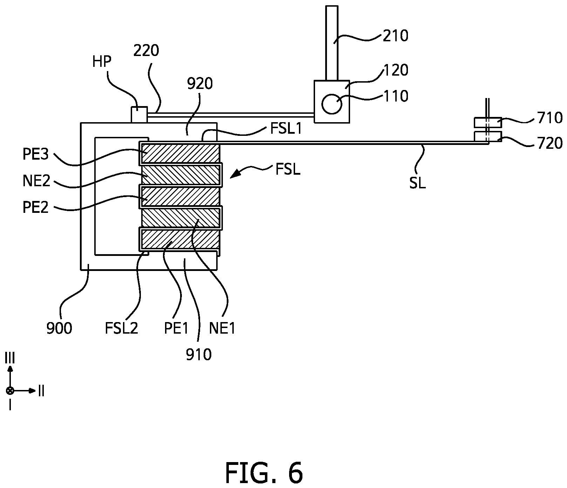

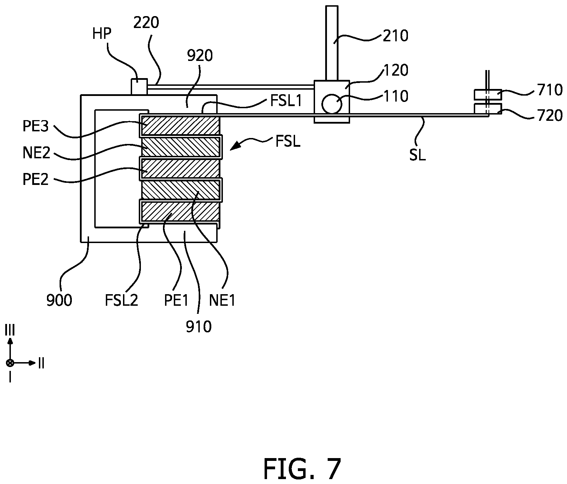

FIG. 6 illustrates a state in which the separator film cutter included in the electrode assembly apparatus illustrated in FIG. 4 is disposed at a cutting position according to one or more embodiments of the present disclosure, and FIG. 7 illustrates a state in which the separator film cutter illustrated in FIG. 6 contacts the separator film according to one or more embodiments of the present disclosure.

In the present embodiment, the separator film cutter 500 has substantially the same configuration as the separator film cutter 500 described with reference to FIGS. 1 to 3. Accordingly, in FIGS. 6 and 7, the same reference numerals will be used for the same components as those in FIGS. 1 to 3, and no further detailed description of the same components will be provided.

As illustrated in FIG. 6, If the separator film SL sufficiently extends to the cutting position, the horizontal driver HP may drive the protruding piston 220 to move forward and the melt cutting unit 100 coupled to the driver 200 may move to the cutting position. If the melt cutting unit 100 is placed at the cutting position, the controller 300 may connect power to the power regulator 130 and perform a preliminary operation to heat the separator film SL.

Subsequently, as illustrated in FIG. 7, in response to a cutting signal from the controller 300, the cutting driver 230 may move the drive rod 210 downward to contact the electric heating line 110 with the separator film SL. Herein, the protruding piston 220 may be configured to have a drive rod 210 and a pinion and rack structure.

Then, the electric heating line 110 may heat the separator film SL. The separator film SL may include the substrate S and the coating layer CL disposed on the substrate S, and the electric heating line 110 may contact the coating layer CL to melt the substrate S with conductive heat transferred through the coating layer CL.

In particular, the electric heating line 110 may be set to have a contact time of about 0.5 seconds or less with the separator film SL so that the melting portion M produced on the substrate S has a temperature of about 150°C to about 200°C. Accordingly, the separator film SL may be cut by the stretch-breaking of the melting portion M without adhesion between the coating layer CL and the melting portion M. As the separator film SL and the upper folded separator film FSL1 are cut, the electrode assembly ES may be formed as an electrode for an individual rechargeable battery. The electrode ejector 900 may eject the individual electrode assembly ES separated from the separator film SL into an electrode tray (not shown), thereby completing rechargeable battery electrodes.

Accordingly, if a separator film cutting process is performed to manufacture unit electrodes, as compared with the conventional cutting process using a cutting knife, shattering of the coating layer CL may be prevented and replacement of the worn knife may be prevented, thereby reducing manufacturing costs.

According to the separator film cutter and the electrode assembly apparatus including the same as described above, the separator film SL and the melt cutting unit 100 may be brought into contact with each other for an appropriate contact time according to the physical properties of the substrate S, to thereby cut the separator film SL by stretch-breaking the substrate S.

In the conventional cutting process using a cutting knife, the coating layer CL is shattered, and dust is generated. In contrast, the separator film cutter 500 according to the present disclosure does not cause damage to the coating layer CL, and thus may prevent the generation of dust fundamentally.

In addition, the melt cutting unit 100 may produce the melting portion M appropriate to the composition of the separator film SL by the controller 300 and cut the separator film SL by stretch-breaking the substrate S, and thus may prevent a defect in which the breaking position of the separator film SL is changed if the separator film to which a tensile force is applied is cut by the cutting knife.

Further, by replacing the cutting knife with the electric heating line 110, replacement costs due to the wear of the cutting knife may be reduced and the efficiency of the electrode assembly process may be increased.

Example embodiments of the present disclosure provide a separator film cutter for cutting a separator film to which a tensile force is applied through a local heating thereto without any mechanical friction.

Other example embodiments of the present disclosure provide an electrode assembly apparatus including the above separator film cutter.

In addition, the melt cutting unit may cut the separator film by stretch-breaking the substrate by appropriately producing the melting portion by the controller according to the composition of the separator film, and thus may prevent a defect in which the breaking position of the separator film is changed if the separator film to which a tensile force is applied is cut by the cutting knife.

Further, by replacing the cutting knife with the electric heating line, replacement costs due to the wear of the cutting knife may be reduced and the efficiency of the electrode assembly process may be increased.

However, aspects and features of the present disclosure are not limited to those described above, and other aspects and features not mentioned will be clearly understood by a person of ordinary skill in the art from the detailed description herein.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A separator film cutter (500) , comprising:
a melt cutting unit (100) configured to produce a melting portion (M) by locally heating a separator film (SL), with a tensile force being applied to opposite ends (120) of the separator film (SL), to cut the separator film (SL);
a driver (200) configured to drive the melt cutting unit (100) to selectively contact the separator film (SL); and
a controller (300) configured to control the driver (200) to heat the separator film (SL) by causing the separator film (SL) and the melt cutting unit (100) to be in contact for a predetermined time.

2. The separator film cutter (500) as claimed in claim 1, wherein the melt cutting unit (100) includes:
an electric heating line (110) traversing in a width direction of the separator film (SL) and configured to generate Joule heat;
a supporting ends (120) supporting the electric heating line (110) at opposite ends (120) thereof; and
a power regulator (130) configured to selectively regulate power supplied to the electric heating line (110) .

3. The separator film cutter (500) as claimed in claim 2, wherein the electric heating line (110) continuously and simultaneously contacts the separator film (SL) in the width direction, and the melting portion (M) is provided as a melt line continuously extending in the width direction.

4. The separator film cutter (500) as claimed in claim 2, wherein the electric heating line (110) discontinuously and simultaneously contacts the separator film (SL) in the width direction, and the melting portion (M) is provided as a plurality of melting portion spots discontinuously arranged in the width direction.

5. The separator film cutter (500) as claimed in any one of the previous claims, wherein the driver (200) includes:
a drive rod (210) connected to the melt cutting unit (100) ;
a protruding piston (220) disposed on an electrode ejector (900) and configured to transport the drive rod (210) in a longitudinal direction of the separator film (SL) to place the drive rod (210) at a cutting position of the separator film (SL); and
a cutting driver (230) configured to linearly move the drive rod (210) in a direction perpendicular to an upper surface of the separator film (SL) from the cutting position.

6. The separator film cutter (500) as claimed in claim 5, wherein the controller (300) includes:
a user interface (310) by which the predetermined time and properties of the melting portion (M) are set;
a drive controller (320) configured to control the cutting driver (230) so that the separator film (SL) and the melt cutting unit (100) are in contact with each other for the predetermined time; and
a power source (330) configured to supply power to the melt cutting unit (100) .

7. The separator film cutter (500) as claimed in any one of the previous claims, wherein the separator film (SL) includes a substrate (S) and a coating layer (CL) disposed on the substrate (S), and the melt cutting unit (100) contacts the coating layer (CL) to melt the substrate (S) using conduction heat transferred through the coating layer (CL).

8. The separator film cutter (500) as claimed in claim 7, wherein the melting portion (M) causes the separator film (SL) to be cut by stretch-breaking of the substrate (S).

9. The separator film cutter (500) as claimed in claim 7 or 8, wherein the substrate (S) includes one of polyethylene and polypropylene, and the coating layer (CL) includes a ceramic.

10. The separator film cutter (500) as claimed in any one of the previous claims, wherein the melting portion (M) has a temperature of 150°C to 200°C, and the predetermined time ranges from 0.1 seconds to 0.5 seconds.

11. An electrode assembly apparatus (1000) for a rechargeable battery, the electrode assembly apparatus (1000) comprising:
a separator film supply (600) including at least one feed roller (FR1) to (FR4) and configured to supply a separator film (SL) having a predetermined tensile force;
a folding guide (700) configured to move in a vertical direction and a horizontal direction in an electrode stacking area (ESA) and to shape the separator film (SL) supplied by the feed roller (FR1) to (FR4) into folded separator films (FSL) for electrode stacking;
an electrode ejector (900) configured to separably fix an electrode assembly (EA) in which a plurality of electrodes having different polarities are stacked alternately between the folded separator films (FSL), and to extend the separator film (SL) connected to the folded separator films (FSL) to a cutting position; and
a separator film cutter (500) configured to produce a melting portion (M) by heating the separator film (SL) at the cutting position to cut the separator film (SL) by stretch-breaking of the melting portion (M) caused by the predetermined tensile force.

12. The electrode assembly apparatus (1000) as claimed in claim 11 wherein the folding guide (700) includes:
a moving guide (710) configured to move in the horizontal direction at the cutting position of the separator film (SL) in the vertical direction in the electrode stacking area (ESA) to shape the separator film (SL) into the folded separator films (FSL); and
a leveling guide (720) disposed below the folding guide (700) to maintain the folded separator films (FSL) flat along surfaces of the plurality of electrodes.

13. The electrode assembly apparatus (1000) as claimed in claim 12, wherein:
the folded separator films (FSL) disposed on an uppermost electrode of the electrode assembly (EA) is integrated with the separator film (SL) to remain flat and horizontal by means of the leveling guide (720) , and
the separator film (SL) is transported to the cutting position by transportation of the electrode ejector (900) fixing the electrode assembly (EA) so that the tensile force is applied to the separator film (SL).

14. The electrode assembly apparatus (1000) as claimed in claim 12 or 13, further comprising:
a stacking die (SD) disposed below the folding guide (700) and configured to form the electrode stacking area (ESA) between the folding guide (700) and the stacking die (SD), with an upper surface of the stacking die (SD) on which the folded separator films (FSL) are disposed; and
an electrode supply (800) disposed on opposite sides of the stacking die (SD) and configured to stack the plurality of electrodes having different polarities alternately on the folded separator films (FSL),
wherein, every time that each of the electrodes is disposed, a folded separator film (FSL) of the folded separator films (FSL) is disposed on the upper surface of the electrode by the leveling guide (720) .

15. The electrode assembly apparatus (1000) as claimed in any one of claims 11 to 14, wherein the separator film cutter (500) includes:
a melt cutting unit (100) configured to produce the melting portion (M) by heating a portion of the separator film (SL) corresponding to the cutting position and cutting the separator film (SL) by the tensile force applied to the melting portion (M);
a driver (200) configured to perform a transport operation of transporting the melt cutting unit (100) from the electrode ejector (900) to the cutting position and a lift operation of selectively moving the melt cutting unit (100) up or down from the cutting position to selectively bring into contact with the separator film (SL); and
a controller (300) configured to control the transport operation and the lift operation to control the driver (200) so that the separator film (SL) and the melt cutting unit (100) are in contact with each other for a predetermined time.
